# EUROPEAN PATENT APPLICATION

(11) **EP 1 443 425 A1**
(43) Date of publication of application: **04.08.2004**
(21) Application number: 03290215.7
(22) Date of filing: 29.01.2003
(51) Int. Cl.: G06F 17/30, G06F 11/34

(54) **Process for maintenance of a repository of documents and system for doing the same**

(71) Applicant: Hewlett-Packard Company, A Delaware Corporation, Palo Alto, CA 94304 (US)
(72) Inventor: Delic, Kemal, 38000 Grenoble (FR); Douillet, Laurent, 38650 St Martin de la Cluze (FR)
(74) Representative: Lloyd, Richard Graham

(57) **Abstract**

A system and process is described for maintaining a repository of resources accessible by users via a communication network through at least one access server, said process comprising: monitoring user interactions with the access server in order to produce one or more log files, preferably comprising at least time stamps, user identifiers and document identifiers and data representative of the navigation path of the user during a session, representative of said interaction; processing said log file for the purpose of computing at least one metric representative of the interaction; determining from said metric at least one aspect of the repository of documents which needs to be modified; creating and formatting a procurement request which is transmitted to an external server to be processed in order to implement the modification.

## Description

### Technical field of the invention

The invention relates to information retrieval and, more particularly, to processes and systems for maintaining an information retrieval system.

### Background art

The progress of information technology and the development of computer systems allows the design of large digitally-stored knowledge bases containing thousands of documents and electronic files. Sophisticated techniques are used for collecting, storing, sorting and quickly retrieving documents contained within the repository.

Help-desk services are but one example of a typical environment where Information retrieval techniques play a significant role. The daily work of help-desk analysts is supported by computer systems containing tens of thousands of problem solving documents. At the request of a customer, a helpdesk analyst has to examine a problem and rapidly provide a solution. To achieve this, the helpdesk analyst typically has to abstract the problem into a few keywords and search for a solution in an on-line knowledge base.

However, retrieval techniques based on keyword searches usually return, by far, too many documents. Practically, only a small proportion of the listed documents are really of any use to the helpdesk analysts - a phenomenon that inevitably reduces the effectiveness of the service provided to the customer. In most cases, first line agents of the helpdesk services have very little time to find an effective and practical solution to each problem, and the use of traditional techniques based on keyword searches provides too much noise and outputs a huge number of documents which cannot easily be exploited. The effective use of a help-desk knowledge base or a repository of documents which contains a huge number of references and documents tends to rapidly become very difficult in practice.

In consequence, help-desk knowledge bases, and more generally any similar such repository of documents, need to be closely monitored, evaluated, and maintained to make sure that they match the requirements of their users.

### Summary of the invention

It is an object of the present invention to provide an architecture, suited for a network configuration, and which allows the development and the maintenance of a repository of documents corresponding to the needs of the users of the database.

In at least preferred embodiments, this is achieved by means of a process for maintaining a repository of resources accessible by users via a communication network through at least one access server, said process comprising:
- monitoring user interactions with the access server in order to produce one or more log files, preferably comprising at least time stamps, user identifiers and document identifiers and data representative of the navigation path of the user during a session, representative of said interaction;
- processing said log file for the purpose of computing at least one metric representative of the interaction;
- determining from said metric at least one aspect of the repository of documents which needs to be modified;
- creating and formatting a procurement request which is transmitted to an external server to be processed in order to implement the modification.

The process can comprise: transmitting log files from said at least one access server to a monitoring server; processing said log files in said monitoring server for the purpose of issuing a first maintenance request which is forwarded to a content management server; processing said maintenance request in said content management server to generate at least one procurement request which is formatted to be received and processed by an outsourcing server.

In preferred embodiments, said maintenance request is enriched by said content management server with information representing definable policies that apply to the resources to be introduced within said repository.

In another aspect, the invention provides an Information retrieval system comprising: at least one access server for providing user access to at least one repository of documents; a monitoring server for periodically receiving and processing log files, preferably comprising at least time stamps, user identifiers and document identifiers and data representative of the navigation path of the user during a session, from said at least one access server, and processing said log files for the purpose of determining need for modification of said repository and generating a corresponding request; a content management server for receiving said request from said monitoring server and generating at least one request adapted to match the requirements of an external outsourcing server for the purpose of obtaining additional documents and enriching the repository of documents.

In preferred embodiments, said content management server complements the request generated by said monitoring server with additional information extracted from files contained within said content management server.

There is therefore provided an automatic interface within the information retrieval system and a set of different outsourcing servers which are available on the server. Without manual operation, the knowledge base can be enriched in order to closely match the expectations of the profile or category of users to which it is dedicated.

The close relationship between the access server(s), the monitoring server receiving the log files and the content management server achieving the interface with the external outsourcing servers permit a closed loop to be automatically created between the users expectations and a set of different outsourcing servers and such closed loop achieves a profiling of the repository of documents which is kept close to the expectations of their users.

### Description of the drawings

An embodiment of the invention will now be described, by way of example only, with reference to the accompanying drawings, wherein:
Figure 1 illustrates a view of the different elements of an Information Retrieval architecture in accordance with one embodiment of the present invention.
Figure 2 illustrates a monitoring process.
Figure 3 illustrates a content management process .

### Description of the preferred embodiment of the invention

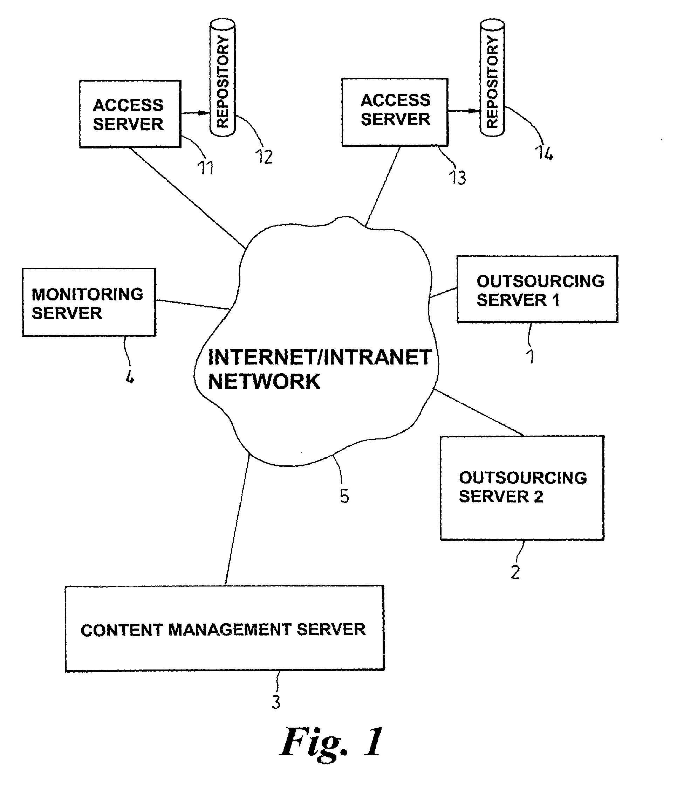

Figure 1 illustrates an architecture of an Information Retrieval system in accordance with a preferred embodiment of the invention. The system uses a repository of problem solving documents which support a hot-line or help-desk service. Clearly, while the hot-line or help-service is a particular application of the invention, similar techniques may be used to maintain any other suitable knowledge database, such as a professional database, a medical database or the like.

The architecture comprises at least one access server - such as access servers 11 and 13 shown in figure 1 - each associated with a database or repository of documents (respectively databases 12 and 14) to be published to customers (not represented in figure 1). The communication between the users and the access servers 11 and 13 is carried out by means of web browsers and the known HTTP protocol.

As the customers of the access servers use and access the documents which are contained within the repositories 12 and 14, the access servers 11 and 13 generate sets of log files containing raw data representative of the interaction sessions of the users. TABLE 1 illustrates a typical example of such a log file which records information such as time stamps or data representative of the navigation path of the users, identification of the documents being accessed and so on. Of course, any suitable data format could be used. Preferably, various elements of information are traced, such as the user identifier, the documents identifiers of the documents presented to the users and/or consulted by them, as well as different time stamp values representative of the sessions. In one embodiment, there is also traced the navigation path of the user during their sessions in order to provide as comprehensive information as possible regarding the conduct of the session.

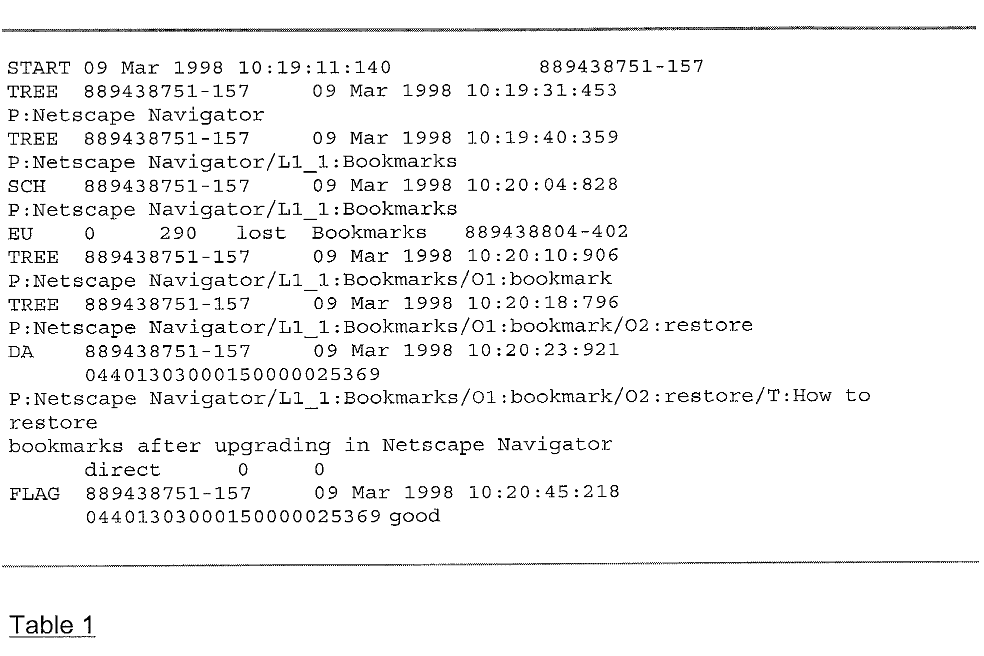

In the preferred embodiment, the raw data contained within the log files generated by the access servers is periodically received by a monitoring server 4 which stores the corresponding information for subsequent analysis for the purpose of determining areas where the repository lacks information, the need for possible maintenance of the information within the knowledge base, or other weaknesses, for instance in the distribution of the documents therein contained. This is achieved by means of processing within monitoring server 4 of the log files which are regularly received from the access servers 11 and 13.

This analysis involves reconstructing from the various elements of information contained in the log files, the sessions of each given user, it being noted that, while http communication is not organized in sessions, this feature permits the different sessions of a user to be reconstructed so as to develop a thorough and comprehensive knowledge of the different sessions of one user.

In order to analyse the data comprised within the log files and to establish the different sessions of each user, monitoring server 4 includes computing means which compares the information contained within the log files (such as the user identification) - in order to provide high level information regarding to the information retrieval session of the customer. It can be seen that, even if the user browses from different locations, all the data representative of the same session can be collated to produce a comprehensive record of the session and a measurement of the quality and relevance of the documents provided to the user.

The result of the processing within monitoring server 4 is used to formulate a request which is then issued and forwarded to a content management server 3.

Content management server 3 receives the requests generated by monitoring server 4 and centralizes the outsourcing process for adding or removing documents within the databases. There is therefore within the system a closed feedback loop between the expectations of the users and the contents of the knowledge base. In response to the users' requests issued by the monitoring server 4, content management server 3 initiates a remove or add process within the knowledge base. If the maintenance request is to remove one document or a set of documents from the knowledge base, then the content management server extracts the parameters associated with said request and preferably incorporates additional guidelines or centralized instructions - for removing the documents from the repository of documents.

A particular process is executed when a request to enrich the database is received from monitoring server 4. In that situation, content management server 3 extracts the data contained within the request - particularly the key words used within the requests formulated by the customers - and enriches such data with additional data extracted from an internal database and representative of a general outsourcing policy which is under control of the content management server 3.

For instance, the data contained within the request from the user may be combined with additional data representing their profile in accordance with the distinctions used in the process disclosed in co-pending unpublished European patent application No: 02354046.1, Filed on March 14, 2002, entitled "Process for Storing and Retrieving a Document within a Knowledge Base or Repository of Documents" by K. DELIC and L. DOUILLET, assigned to the assignee of the present application the contents of which is herein incorporated by reference for all purposes. This permits to be incorporated within the request which will be forwarded to external servers information regarding the length of the documents desired, the nature of the reference being researched, based on a classification assigned to three different tags available: a first FIX tag, a second STEPNOTE tag and a third TECHNOTE tag. In accordance with the above mentioned European application, the first, so-called, FIX tag is directed to designate a document which comprises an immediate possibility of action from the user of the potential reader of said document. The second so-called STEPNOTE tag is arranged to designate a document which comprises a short sequence of steps which are expected to solve the problem to which is faced the customer. The third so-called TECHNOTE is assigned to a document when said document comprises a broader development or technical description, involving background information which the reader has to read and understand for the purpose of getting deeper insight into the subject matter covered by the problem.

Therefore, the content management servers serve to interface between the specific requirements of the Information retrieval system and the outside servers which are used for enriching and updating the knowledge base.

When the documents are received from the outsourcing servers 1 and 2, the content management server performs a filtering process in order to reduce the number of potential new documents so as to keep a closer control on the enrichment process of the knowledge base and the remaining elements are stored within an appropriate storage area before they are published to the different access servers 11 and 13.

A closed loop feedback thus exists between, on the one hand, the queries issued by the users of the knowledge base and, on the other hand, the outsourcing process of the knowledge base which is automatically managed under control of the content management servers. Even with a knowledge base limited to a core set of documents, it can be seen that the enrichment process of the knowledge base permits the base to closely match the expectations of the users.

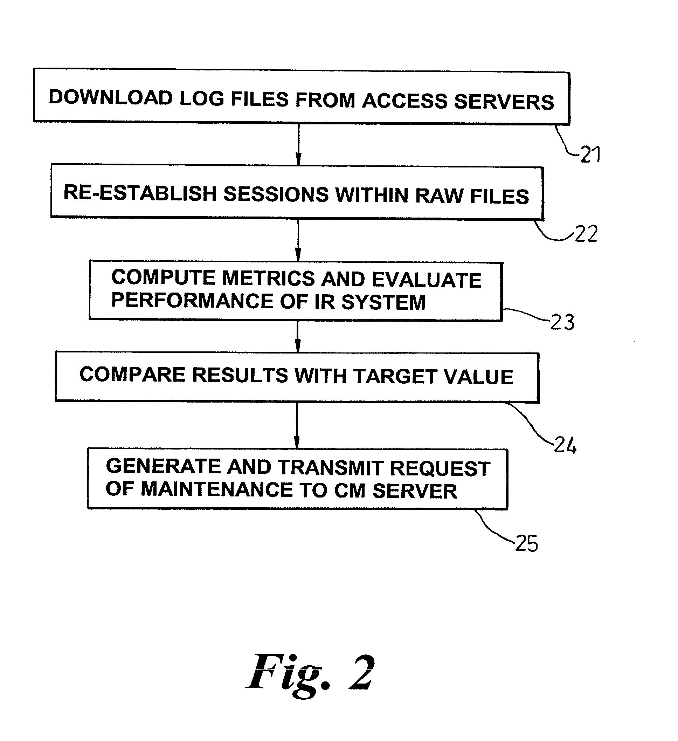

Figure 2 more particularly illustrates the process which is executed by monitoring server 4.

The process starts with a step 21 which corresponds to the periodic downloading to monitoring server 4 of the log files generated by access servers 11 which record the interactive sessions of the users.

In a step 22, the log files which are received by monitoring server 4 are analysed and collated in order to reestablish the different sessions belonging to the same user. This in turn enables a determination of the different areas within the knowledge base where additional documents and references should be introduced. In particular, the values of the different time stamps are analysed as well as the navigation paths of the sessions in order to determine whether, in one particular session, the searching process failed to return any relevant documents at all and the particular area within the base which therefore needs to be enriched.

In a step 23, the monitoring server 4 computes different metrics in order to evaluate the performance of the whole database.

In a step 24, monitoring server 4 compares the result of the metrics which were computed with defined target values. Preferably, one target or objective is to reduce the number of "zero documents found" events below a predeterminable threshold, or to improve the ranking within the list of references displayed to the user of the documents flagged "good" by the users

In a step 25, in response to the comparison step 24, the monitoring server identifies one or more particular areas within the repository of document that require improvement, and generates a request which is transmitted to the content management server 3.

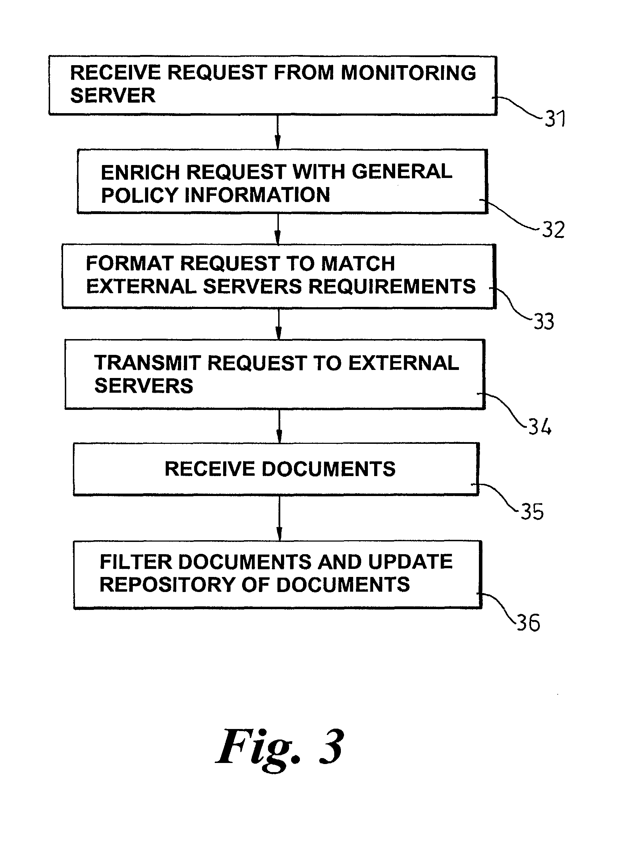

Figure 3 illustrates the process which is executed within content management server 3 which starts with a step 31 when server 3 receives the request from monitoring server 4. As explained above, the request contains information regarding the area or areas within the knowledge base which need to be enriched and also examples of keywords from the users which are representative of searches within those particular areas.

In a step 32, the request is complemented with additional information generated by content management server 3 which may depend upon the general outsourcing or procurement policy defined by the knowledge base administrator. Typically, the additional information further specifies the general type of documents which are expected to be introduced within the base, such as the size of the documents or parameters relating to financial aspects concerning, for instance, the cost of using of licensed documents within the knowledge base.

In a step 33, an outsourcing or procurement request is generated and formatted within the particular format of one or more external commercial servers 1 and 2. The precise format which is to be used closely depends upon the server which is to be addressed and may vary in accordance with this server.

In a step 34 the formatted procurement request is transmitted to the external server and corresponding packages of documents are then received in a step 35.

The particular packages which are received are then analysed by content management server 3 and a filtering step 36 is executed in order to identify the documents which specifically match the requirements of content management server 3. For instance, the packages of documents may incorporate templates representative of the financial conditions for the use of the documents and content management server may use these template for the purpose of filtering documents which will finally be incorporated within the knowledge base. The step 36 then completes with the incorporation of the filtered documents within the knowledge base.

It can thus be seen that content management server 3 acts, in a very flexible way, as the the interface between the information retrieval system as such and the different outsourcing servers.

It can be seen that the invention can be applied to the automatic creation and development of specialized database and knowledge portals. The new era of information calls for the development of highly specialized - and high value - databases which will provide efficient and quick references according specialized profiles of information customers.

While the invention was particularly described with reference to the arrangement of a repository of documents or electronic files, it will be understood that the process can be straightforwardly adapted to any kind of repository of resources.

## Claims

1. Process for maintaining a repository of resources accessible by users via a communication network through at least one access server, said process comprising:
- monitoring user interactions with the access server in order to produce one or more log files representative of said interaction;
- processing said log file for the purpose of computing at least one metric representative of the interaction;
- determining from said metric at least one aspect of the repository of documents which needs to be modified;
- creating and formatting a procurement request which is transmitted to an external server to be processed in order to implement the modification.

2. A process as claimed in claim 1 comprising:
- transmitting log files from said at least one access server to a monitoring server;
- processing said log files in said monitoring server for the purpose of issuing a first maintenance request which is forwarded to a content management server;
- processing said maintenance request in said content management server to generate at least one procurement request which is formatted to be received and processed by an outsourcing server.

3. A process as claimed in claim 2 wherein said maintenance request is enriched by said content management server with information representing definable policies that apply to the resources to be introduced within said repository.

4. A process as claimed in claim 2 or claim 3 wherein said log files are processed by said monitoring server for the purpose of reconstructing the sessions of each user.

5. A process as claimed in any preceding claim wherein said log files contain at least a time stamp, information relevant to the identification of the users and the resources sought and information corresponding to the navigation path of the users.

6. Information retrieval system comprising:
- at least one access server for providing user access to at least one repository of documents;
- a monitoring server for periodically receiving and processing log files from said at least one access server, and processing said log files for the purpose of determining need for modification of said repository and generating a corresponding request;
- a content management server for receiving said request from said monitoring server and generating at least one request adapted to match the requirements of an external outsourcing server for the purpose of obtaining additional documents and enriching the repository of documents.

7. Information retrieval architecture according to claim 6 wherein said content management server complements the request generated by said monitoring server with additional information extracted from files contained within said content management server.

8. Information retrieval architecture according to claim 6 or claim 7 wherein said log files comprise at least time stamps, user identifiers and document identifiers and data representative of the navigation path of the user during a session.

9. Information retrieval architecture according to claim 8 wherein said monitoring server is arranged to analyse the log files for the purpose of computing one or more metrics representative of the quality of the documents submitted to the user during said sessions.

10. Monitoring server comprising means for performing the steps of claim 2 and further comprising
- program code elements for receiving log files generated by said at least one access server,
- program code elements for processing said log files and for articulating the data therein including for restablishing the sessions of the users and for deriving a set of metrics representative of said sessions;
- program code elements for generating a request for enrichement of said repository and for transmitting said request to said content management server.

11. Content management server comprising means for receiving requests for enriching a repository of documents from said monitoring server and for enriching said requests with additional information and means for generating and transmitting a procurement request which is formatted to be received and processed by a corresponding outsourcing server
